# EUROPEAN PATENT APPLICATION

(11) **EP 1 710 698 A2**
(43) Date of publication of application: **11.10.2006**
(21) Application number: 06111481.5
(22) Date of filing: 21.03.2006
(51) Int. Cl.: G06F 9/445

(54) **Generic software requirements analyser**

(30) Priority: 05.04.2005 US 98961
(71) Applicant: Hewlett-Packard Development Company, L.P., Houston, TX 77070 (US)
(72) Inventor: Brothers, William, Roseville, CA CA 95747 (US); Lee, Noreen K., Roseville, CA CA 95747 (US)
(74) Representative: Lawman, Matthew John Mitchell

(57) **Abstract**

A set of requirements for an application program (308) are generated by a producer (302) of the application program and communicated to a potential user of the application program via a computer file (306) that specifies the requirements. The computer file (306) may be used by the potential user to analyze the capabilities of a computer system (314) relative to the set of requirements for the application program (308).

## Description

### FIELD

This invention relates generally to the field of computer software. More particularly, this invention relates to computerized method for analyzing a computer system relative to a set of requirements for an application program.

### BACKGROUND

For proper installation and operation of application software on a computer, it is necessary for the computer to satisfy a set of requirements that may be specific to that application program. These requirements may be checked manually at any time or checked by the installation process when the software is installed on the computer.

The manual process is time consuming and error prone. It is normally only done before installation of the application software or when operation of the software fails. The manual process may involve running a number of programs and comparing the output against documented requirements. This creates problems in two areas. Firstly, the user performing the manual check must understand the meaning of the output and, secondly, the documentation is fixed in time and may not reflect the latest requirements.

Installation software for a specific application may test for critical requirements, such as disk space, memory capabilities, previous versions of the software, etc. However, it is unusual for the installation software to perform a thorough examination of the environment to determine the successful operation of the software. This is due to the amount of programming required and the execution time that would be added to the installation program. Each time a piece of application software is developed for publishing, new code must be written to evaluate the environment.

The problem is still greater in a network of computers. For example, applications implemented on an enterprise network may span a number of computers. Currently, each affected computer in the network must be checked manually to see if it will comply with the requirements of the new application software. This consumes significant time and resources each time a new application is to be implemented.

One approach to the problem is the use of asset management systems, which attempt to keep track of the computers in the network. However, this information is often inaccurate, or incomplete. Further, the information in an asset management system must still be checked against the published requirements manually.

Another approach is the use of application specific software that assesses the readiness of a computer system prior to the installation of a specific piece of software. This approach has been used prior to installation of specific operating systems.

### BRIEF DESCRIPTION OF THE DRAWINGS

**FIG. 1** is a flow chart depicting a method consistent with certain embodiments of the invention.

**FIG. 2** is a flow chart depicting a method consistent with certain embodiments of the invention.

**FIG. 3** is a diagrammatic representation of a computer system consistent with certain embodiments of the invention.

**FIG. 4** is a diagrammatic representation of a networked computer system consistent with certain embodiments of the invention.

### DETAILED DESCRIPTION

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described. In the description below, like reference numerals are used to describe the same, similar or corresponding parts in the several views of the drawings.
The invention relates to a computerized method and associated software for analyzing a computer system relative to a set of requirements for an application program. In one embodiment, a list of the requirements for the application program is stored in a computer file. A computer is then operated to determine the capabilities of the computer system and perform a comparison between the capabilities of the computer system and the application program's requirements. The results of the comparison are then reported. The computer file containing the list of the requirements for the application program may be generated by the producer of the application program. A software tool including a user interface may be used by the publisher to generate the computer file.

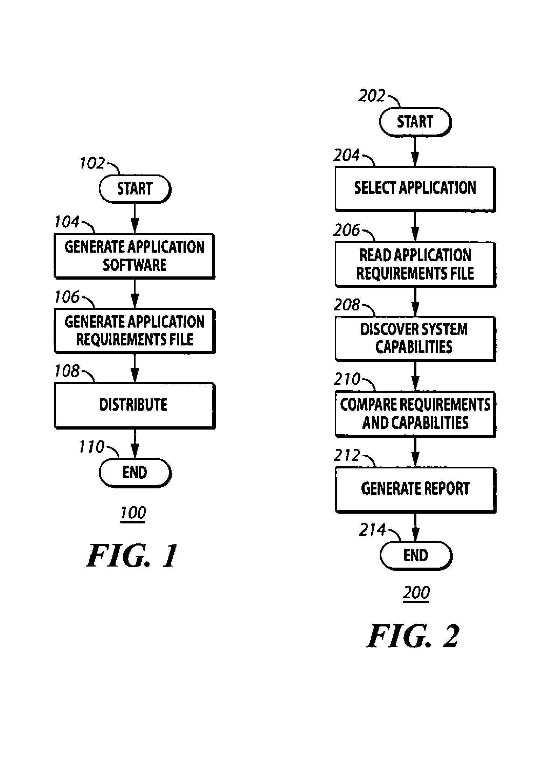

FIG. 1 is a flow chart 100 depicting a method consistent with certain embodiments of the invention. Referring to **FIG. 1,** following start block 102, application software is generated at block 104 by a software producer (hereafter also referred to as the software publisher). The application software may be designed to operate in a variety of computer environments utilizing a variety of hardware and software resources. The application software has a set of requirements related to the minimum resources needed for the application to perform its function. These requirements are usually set by the designer or producer of the software, but may be set at any time. For example, requirements may be generated or modified after the application software has been tested, or as a result of user feedback. At block 106, a computer file is generated that lists the requirements for the application software. This computer file, which will be referred to as a 'requirements file', contains information that may be retrieved by, passed to or otherwise made available or communicated to a user or potential user of the application software. The requirements file may be in an extensible Markup Language (XML) format, for example.

At block 108 the requirements file is distributed to the user. The user may be provided with the requirements file prior to procuring the application software. This allows the user to determine if the application software will operate on his or her computer system before the software is purchased. This benefits the publisher in that it reduces the number of software returns. It also benefits the user, since the user can avoid the inconvenience of returning software and obtaining refunds for software that does not operate correctly on the user's computer. Alternatively, the application software may be distributed at the same time as the requirements file. The process terminates at termination block 110.

**FIG. 2** is a flow chart 200 depicting a method consistent with certain embodiments of the invention. The method allows a user to determine if his or her computer system is capable of running selected application software. Following start block 202 in **FIG. 2,** a user executes a computer program that allows him or her user to select an application at block 204. The computer program may, for example, search directories on the user's computer system to find valid requirements files, access these files to read a description of the corresponding application and then display a menu to the user for selection. At block 206 the requirements file of the selected application is read. At block 208, the capabilities of the computer system are discovered. These may be general capabilities or capabilities specifically related to the requirements listed in the requirements file.

At block 210, the discovered capabilities are analyzed by comparing them to requirements listed in the requirements file. At block 212 a report is generated describing results of the analysis. This report allows the user to determine if the selected application will operate correctly on his or her computer system. The process ends at termination block 214.

The process 200 may be performed by the user prior to or after installation of an application. It may also be performed at programmed intervals after an application has been installed. This allows a computer system to be monitored to discover if a required resource becomes unavailable.

Software updates to an installed application may be distributed with updated requirements files.

Requirements files may be updated at any time if, for example, the original requirements are found to be in error.

The report may be copied to the publisher to assist in technical support of the published application software.

In one embodiment, the process 200 is performed by a single computer program. In a further embodiment, the processes 208 and 210 are performed by a separate computer programs that may be executed on different computers.

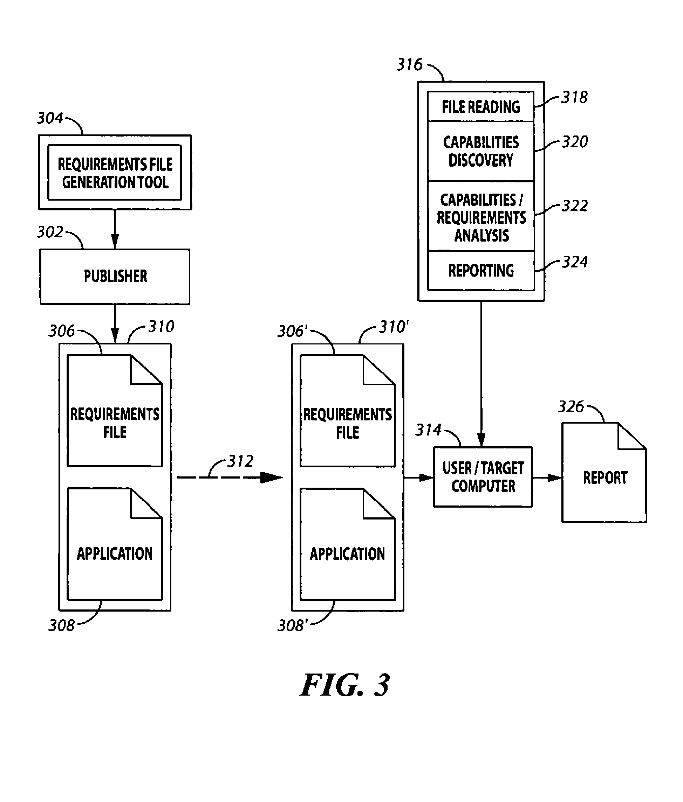

**FIG. 3** is a diagrammatic representation of a computer system consistent with certain embodiments of the invention. Referring to **FIG. 3,** a software publisher 302 uses a requirements file generation tool 304 to generate a requirements file 306 associated with application software 308. The requirements file generation tool 304 may include a user interface that prompts for requirements by attribute. Attributes includes kernel parameters, existence of certain files, version numbers of installed software, register heap size, etc. The requirements file generation tool 304 then writes a requirements file 306 containing the requirements information.

The requirements file 306 and the associated application software 308 may be packaged together as a published software bundle 310 for distribution, or they may be distributed separately. A copy 306' of the requirements is distributed (as indicated by arrow 312) to a target computer 314 of one or more users. A copy 308' of the application software may be distributed to the user at the same time in a copy 310' of the published software bundle, or may be distributed at a later time.

The user may determine if his or her computer system is capable of running the application software by using generic software analysis tools 316. Each tool comprises a set of programming instructions. The generic software analysis tools 316 include a file reading and interpreting tool 318 for reading and interpreting the requirements file, a capabilities discovery tool 320 that discovers the resources and capabilities available on the user's computer system. The generic software analysis tools 316 also include a capabilities/requirements analysis tool 322 that is used to compare the discovered capabilities of the user's computer system to the application software requirements listed in the requirements file 306'. The generic software analysis tools 316 also include a reporting tool 324 that is used to generate a report 326 for the user. The report 326 contains the results of the analysis and allows the user to determine if the software application 308' will operate correctly on the user's computer system. The generic software analysis tools 316 may be run before installation of the application software 308' or after installation.

It will be apparent to those of ordinary skill in the art that the published software bundle 310 may be distributed to multiple users.

It will also be apparent to those of ordinary skill in the art that the generic software analysis tools 316 may be used to analyze multiple pieces of application software. Thus, the publisher is freed from the task of producing system capability analysis software for each new application.

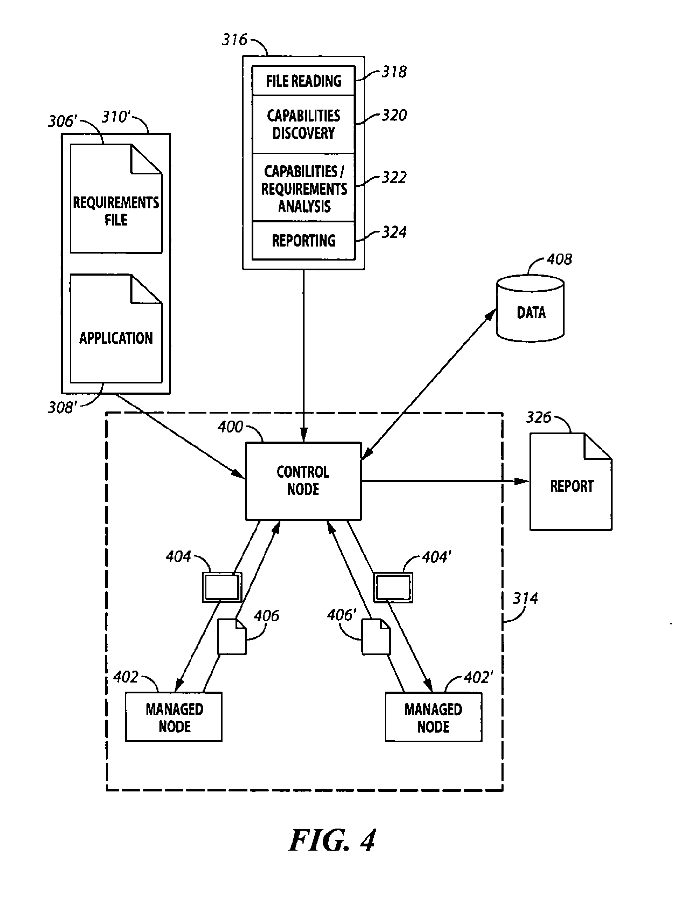

**FIG. 4** is a diagrammatic representation of a networked computer system consistent with certain embodiments of the invention. **FIG. 4** shows a networked computer system 314, such as an enterprise network, having a central site or control node 400 that is operated by the user, and a number of managed nodes, 402 and 402'. Applications implemented on a network may span the control node and a number of managed nodes. The user may determine if the networked computer system 314 is capable of running the application software by using generic software analysis tools 316. The generic software analysis tools 316 include a file reading and interpreting tool 318 for reading and interpreting the requirements file. The tools 316 also include a capabilities discovery tool 320 that discovers the resources and capabilities available on the networked computer system. In order to discover the capabilities of other managed nodes in the network (402 and 402' for example), a small program (404, 404') is sent to each of the managed nodes under inspection. The program is responsible for collecting relevant information (such as inventory and configuration data) for the recipient managed node. After the information has been collected, the program sends a report of the information (406, 406') back to the control node 400. The report may be sent once the data has been collected or in response to a request from the control node. The control node 400 maintains a list of systems that are relevant for inspection. It may also maintain a list of whether a current data set exists for each system. For those systems for which a data set is needed, a network transaction is initiated by the control point to gather the data set. This information may be stored in a local repository 408. At any time, ad hoc reports cam be generated summarizing the inventory and configuration data gathered at an enterprise level. Once gathered, the data can be analyzed by a capabilities/requirements analysis tool 322 for prerequisite software, patches, hardware and configuration, for example.

The generic software analysis tools 316 also include a reporting tool 324 that is used to generate a report 326 for the user. The report 326 may contain any anomalies to enable the user to determine if the software application 308' will operate correctly on the user's computer system and to make decisions about the time and resources needed to prepare for an application.

The analysis uses information from the requirement file 306' and identifies any systems in the network that do not meet the requirements. In one embodiment, the description of the required software, hardware and configuration comprises a list of attribute tags and associated values. The file may be written in accordance with an industry-standard protocol such as the Standard Generalized Markup Language (SGML) administered by the International Organization for Standardization (ISO) or the extensible Markup Language (XML) protocol administered by the World Wide Web Consortium.

An example of an XML requirements file is listed below.

This example is for an application named "Network Node Manager" and contains requirements or prerequisites for running the application under the HP-UX™ operating system of Hewlett Packard Corporation and the WINDOWS 2000™ operating system of Microsoft Corporation. Hardware, software and conflict avoidance requirements are specified for each operating system. Other tags may be used as required.

In prior approaches, each affected computer in the network must be checked manually to see if it will comply with the requirements of the new application software. This consumes significant time and resources each time a new application is to be implemented. The automated process described above avoids the need for a manual process, and thereby reduces the chance of human error.

Those skilled in the art will appreciate that the program steps and associated data used to implement the embodiments described above can be implemented using disc storage as well as other forms of storage, such as, for example, Read Only Memory (ROM) devices, Random Access Memory (RAM) devices, optical storage elements, magnetic storage elements, magneto-optical storage elements, flash memory, core memory and/or other equivalent storage technologies without departing from the present invention. Such alternative storage devices should be considered equivalents.

The present invention, as described in embodiments herein, is implemented using a programmed processor executing programming instructions that are broadly described above in flow chart form that can be stored on any suitable electronic storage medium. However, those skilled in the art will appreciate that the processes described above can be implemented in any number of variations and in many suitable programming languages without departing from the present invention. For example, the order of certain operations carried out can often be varied, additional operations can be added or operations can be deleted without departing from the invention. Error trapping can be added and/or enhanced and variations can be made in user interface and information presentation without departing from the present invention. Such variations are contemplated and considered equivalent.

While the invention has been described in conjunction with specific embodiments, it is evident that many alternatives, modifications, permutations and variations will become apparent to those of ordinary skill in the art in light of the foregoing description. Accordingly, it is intended that the present invention embrace all such alternatives, modifications and variations as fall within the scope of the appended claims.

## Claims

1. A computer usable medium having computer readable code embodied therein for analyzing a computer system (314) relative to a set of requirements for an application program (308), the computer readable code comprising:
a first set of programming instructions (318) to read a computer file (306), the computer file (306) comprising a list of the requirements for the application program (308);
a second set of programming instructions (320) to determine the capabilities of the computer system (314);
a third set of programming instructions (322) to perform a comparison between the capabilities of the computer system (318) and the requirements for the application program (308); and
a fourth set of programming instructions (324) to report the results of the comparison.

2. A computer usable medium having computer readable code in accordance with claim 1, wherein the computer system (314) is a computer network having a control node (400) and one or more managed nodes (402), wherein the second set of programming instructions (320) comprises a fifth set of programming instructions (404) for discovering the capabilities of the one or more managed nodes (402).

3. A computer usable medium having computer readable code in accordance with claim 2, wherein the second set of programming instruction (320) further comprises programming instruction to distribute the fifth set of programming instructions (404) from the control node to a managed node (402).

4. A computer usable medium having computer readable code in accordance with claim 2, wherein the second set of programming instruction (320) further comprises programming instructions to request a report of capabilities from a managed node (402).

5. A computer usable medium in accordance with claim 1, wherein the computer file (306) comprises a set of attribute tags and associated data values.

6. A method for communicating a set of requirements for an application program (308) generated by a producer (302) of the application program to a potential user of the application program, the method comprising:
the producer (302) of the application program generating a computer file (306) specifying the set of requirements for an application program (308);
passing a copy (306') of the computer file (306) to the potential user; and
the potential user executing a computer program (316) to read the computer file (306) and analyze the capabilities of a computer system (314) relative to the set of requirements for the application program (308).

7. A method in accordance with claim 6, wherein the producer (302) of the application program (308) generating the computer file (306) comprises:
the producer (302) of the application program using a software tool (304) that prompts the producer (302) for requirements by attribute.

8. A method in accordance with claim 6, further comprising the potential user using a software tool (316) to discover the capabilities of the computer system (314) on which the application program (308) is to be operated.

9. A method in accordance with claim 8, wherein the computer system (314) on which the application is to be operated is a computer network comprising a control node (400) and one or more managed nodes (402), and wherein discovering the capabilities of the computer system (314) comprises:
executing a computer program at a managed node (402) of the computer network to determine the capabilities of the managed node; and
the managed node (402) communicating the capabilities (406) of the managed node to the control node (400).

10. A method in accordance with claim 9, wherein the computer program (404) executed at the managed node (402) is passed from the control node (400) to the managed node (402).
